# EUROPÄISCHE PATENTANMELDUNG

(11) **EP 3 531 629 A1**
(43) Veröffentlichungstag der Anmeldung: **28.08.2019**
(21) Anmeldenummer: 19157736.0
(22) Anmeldetag: 18.02.2019
(51) Int. Cl.: H04L 12/40

(54) **TEILNEHMERSTATION FÜR EIN BUSSYSTEM UND VERFAHREN ZUR ERHÖHUNG DER DATENRATE EINES BUSSYSTEMS**

(30) Priorität: 21.02.2018 DE 102018202615
(71) Anmelder: Robert Bosch GmbH, 70442 Stuttgart (DE)
(72) Erfinder: Weissenmayer, Simon, 74223 Flein (DE); Mutter, Arthur, 73765 Neuhausen (DE)

(57) **Zusammenfassung**

Es ist eine Teilnehmerstation (10; 30; 100) für ein Bussystem (1) und ein Verfahren zur Erhöhung der Datenrate eines Bussystems (1) gezeigt. Die Teilnehmerstation (10; 30; 100) umfasst eine Kommunikationssteuereinrichtung (11) zur Auswertung einer Nachricht (45, 46, 47), die von mindestens einer weiteren Teilnehmerstation (10, 20, 30; 100) des Bussystems (1) über das Bussystem (1) empfangen wurde, bei welchem Bussystem (1) zumindest zeitweise ein exklusiver, kollisionsfreier Zugriff einer Teilnehmerstation (10, 20, 30) auf eine Busleitung (40; 50) des Bussystems (1) gewährleistet ist, wobei die Kommunikationssteuereinrichtung (11) mindestens zwei RX-Protokollmaschinen (1111 bis 1113; 1111 bis 1114) aufweist, welche eingerichtet sind, verschiedene Bit-Timing-Parameterdatensätze (C1 bis C3; Ca bis Ce; C1 bis C4) zu verwenden, um auszuwerten, ob die empfangene Nachricht (45, 46, 47) gültig ist, wobei den mindestens zwei RX-Protokollmaschinen (1111 bis 1113; 1111 bis 1114) jeweils ein Register (R1 bis R3; R1 bis R4) zugeordnet ist, in welches die zugeordnete RX-Protokollmaschine (1111 bis 1113; 1111 bis 1114) ausgestaltet ist, das Ergebnis ihrer Auswertung der empfangenen Nachricht (45, 46, 47) zu schreiben.

## Beschreibung

Die vorliegende Erfindung betrifft eine Teilnehmerstation für ein Bussystem und ein Verfahren zur Erhöhung der Datenrate eines Bussystems, bei welchen ein empfangenes Bussignal mehrfach mit unterschiedlichen Bit-Timing-Parametern ausgewertet wird, um auch bei Verfälschung eines Signalpegels, insbesondere in Bezug auf Einstrahlung, die für die elektromagnetische Verträglichkeit (EMV) relevant ist, eine sichere Kommunikation in dem Bussystem mit einer möglichst hohen Übertragungsrate realisieren zu können.

### Stand der Technik

Zur Übertragung von Informationen zwischen Teilnehmerstationen eines Bussystems werden die Informationen von den Teilnehmerstationen in ein Signal mit unterschiedlichen Spannungszuständen umgewandelt, welches seriell oder parallel über einen Bus des Bussystems zwischen den Teilnehmerstationen übertragbar ist. Insbesondere ist hierbei eine Kommunikation zwischen Sensoren und Steuergeräten denkbar, wie sie beispielsweise in einem Fahrzeug oder einer industriellen Fertigungsanlage, usw. stattfindet. Als Beispiel für ein serielles Bussystem hat das CAN-Bussystem mit seinen Weiterentwicklungen wie TTCAN (Time Trigger CAN = zeit-getriggertes CAN), CAN FD usw. eine weite Verbreitung gefunden.

Insbesondere CAN FD, das in ISO11898-1:2015 als CAN Protokoll-Option beschrieben ist, ermöglicht eine Erhöhung der Datenübertragungsrate in einer Datenphase. Damit kann der stetig wachsenden Zahl intelligenter Sensoren und der stärkeren Vernetzung der Steuergeräte im Fahrzeug und damit der wachsenden Anzahl der Teilnehmerstationen am CAN-Bus und des Datenaufkommens auf dem CAN-Bus begegnet werden. Bei einem CAN FD-Bussystem ist eine Datenübertragungsrate von größer 1 MBit pro Sekunde (1Mbps) möglich, beispielsweise von 2 Mbit/s, 5 Mbit/s, oder einer beliebigen anderen Datenübertragungsrate von größer 1 Mbit/s usw.. Zudem ist ein CAN-HS-Bussystem (HS = Hochgeschwindigkeit = Highspeed) bekannt, bei welchem eine Datenübertragungsrate von bis zu 500 kbit pro Sekunde (500 kbps) möglich ist.

Bei den üblichen Bustopologien, welche möglichst viele Teilnehmerstationen miteinander verbinden sollen, werden CAN-Teilnehmerstationen mit Stichleitungen an den Bus angeschlossen. Problematisch daran ist, dass an jeder Abzweigung der Busleitung Reflexionen bei der Datenübertragung entstehen. Diese Reflexionen überlagern sich mit den originalen Signalen und stören den Empfang der Empfänger. Je größer die Reflexionen sind, umso langsamer muss die Datenrate gewählt werden, um das Signal noch zuverlässig übertragen bzw. empfangen zu können. Hierbei gilt, je kürzer die Leitung zwischen Störquelle und Empfänger und je länger die Leitung zwischen Sender und Empfänger umso schlechter die Signalqualität.

Ein weiteres Problem besteht darin, dass bei der Auslegung eines CAN-Netzwerks oder Bussystems für jede einzelne Teilnehmerstation eingestellt wird, zu welchen Zeitpunkten ein Bit abgetastet werden soll. Diese Einstellung wird auch als Bit-Timing bezeichnet. Je nachdem von welcher Teilnehmerstation das Signal empfangen wird, sind andere Zeitpunkte für den fehlerfreien Empfang optimal. Allerdings können die Zeitpunkte nicht abhängig von der sendenden Teilnehmerstation variiert werden. Daher muss bei der Auslegung eines CAN-Netzwerks oder Bussystems ein Kompromiss für die besten Zeitpunkte unter Berücksichtigung aller Teilnehmerstationen gefunden werden. Insbesondere bei der Auslegung eines Netzwerks mit mehreren CAN-FD-Teilnehmern ist es schwierig, die Zeitpunkte so einzustellen, dass alle Teilnehmer das Signal fehlerfrei empfangen können. Sollen später neue Teilnehmerstationen in das Bussystem eingefügt werden, kann es sein, dass der bisher gefundene Kompromiss für die besten Zeitpunkte nicht mehr der beste Kompromiss für das dann vorliegende Bussystem ist. Alles dies führt letztlich zu einer Verringerung der Datenrate in dem Bussystem.

### Offenbarung der Erfindung

Es ist Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, mit welchen auch bei Störungen auf dem CAN-Bus, wie ungünstigen EMV-Bedingungen bzw. EMV-Einstrahlung, dennoch eine möglichst hohe Datenübertragungsgeschwindigkeit im Bussystem realisiert werden kann.

Die Aufgabe wird durch eine Teilnehmerstation für ein Bussystem mit den Merkmalen des Anspruchs 1 gelöst. Die Teilnehmerstation umfasst eine Kommunikationssteuereinrichtung zur Auswertung einer Nachricht, die von mindestens einer weiteren Teilnehmerstation des Bussystems über das Bussystem empfangen wurde, bei welchem Bussystem zumindest zeitweise ein exklusiver, kollisionsfreier Zugriff einer Teilnehmerstation auf eine Busleitung des Bussystems gewährleistet ist, wobei die Kommunikationssteuereinrichtung mindestens zwei RX-Protokollmaschinen aufweist, welche eingerichtet sind, verschiedene Bit-Timing-Parameterdatensätze zu verwenden, um auszuwerten, ob die empfangene Nachricht gültig ist, wobei den mindestens zwei RX-Protokollmaschinen jeweils ein Register zugeordnet ist, in welches die zugeordnete RX-Protokollmaschine ausgestaltet ist, das Ergebnis ihrer Auswertung der empfangenen Nachricht zu schreiben.

Mit der Teilnehmerstation kann die Datenübertragungsgeschwindigkeit bzw. Datenübertragungsrate gegenüber bisherigen Bussystemen erhöht werden. Dies gilt, auch wenn nur eine Teilnehmerstation des Bussystems ausgeführt ist, wie zuvor beschrieben. Die maximale Erhöhung ist jedoch erreichbar, wenn alle Teilnehmerstationen des Bussystems ausgeführt sind, wie zuvor beschrieben.

Zudem wird die Auslegung des Bussystems vereinfacht, da die Einstellungen der Parameter für ein Bit-Timing im Betrieb des Bussystems automatisch durchgeführt werden. Dadurch sind Steuergeräte, Aktoren und Sensoren als Teilnehmerstationen zum einen in unterschiedlichen Bussen einsetzbar, ohne die Software für das Bit-Timing bzw. die richtige Baudrate bei der Inbetriebnahme anpassen zu müssen. Zum anderen ist die automatische Einstellung sehr vorteilhaft bei Anwendungen, bei welchen nach und nach von unterschiedlichen Herstellern immer mehr Teilnehmerstationen an die Busleitung angeschlossen werden. Außerdem reagiert das Bit-Timing auf Änderungen der Umgebungsbedingungen, wie Temperatur und/oder Luftfeuchtigkeit, etc., selbsttätig, so dass unter allen Bedingungen die optimale Übertragungsrate in dem Bussystem möglich ist. Dadurch ist es nicht mehr erforderlich, die Datenrate des Busses zu reduzieren, wenn kein geeigneter Zeitpunkt für den fehlerfreien Empfang gefunden werden kann.

Somit ist die Teilnehmerstation auch für den Einsatz in höher getakteten Systemen, wie beispielsweise CAN-FD, usw., geeignet. Zudem ist die beschriebene Ausgestaltung der Teilnehmerstation auch für bereits existierende Teilnehmerstationen, die für die Kommunikation mit einem beliebigen CAN-Protokoll ausgestaltet sind, als Zusatzfunktion ergänzbar. Die zuvor beschriebene Teilnehmerstation eignet sich zum Einsatz von CAN-FD auch bei Anwendungen, bei denen bisher keine weitere Erhöhung der Datenrate möglich war. Solche Anwendungen sind beispielsweise Bustopologien, bei welchen CAN-FD aufgrund von Leitungsreflexionen bisher nicht einsetzbar war. Hierbei kann es ausreichend sein, nur diejenigen Teilnehmerstationen auf die zuvor beschriebene Weise auszugestalten, die besonders stark von Leitungsreflexionen betroffen sind. Der maximale Nutzen ergibt sich jedoch, wenn alle Teilnehmerstationen des Bussystems auf die zuvor beschriebene Weise ausgestaltet sind.

Vorteilhafte weitere Ausgestaltungen der Teilnehmerstation sind in den abhängigen Ansprüchen beschrieben.

Die Teilnehmerstation kann zudem eine Vergleichseinheit zum Vergleich von Daten der Register und zudem einen Empfangsspeicher aufweisen zum Speichern von gültigen Daten eines der Register sofern eine Prüfung anhand eines Nachrichten-Identifizierers erfolgreich war, der in der empfangenen Nachricht umfasst ist, und zur Weitergabe der gültigen Daten an eine Schnittstelle zu einem Steuergerät der Teilnehmerstation.

Gemäß einem Ausführungsbeispiel ist die Kommunikationssteuereinrichtung ausgestaltet, zusätzlich zu den Bit-Timing-Parameterdatensätzen, die den mindestens zwei RX-Protokollmaschinen zugeordnet sind, zusätzliche Parameterdatensätze und zugehörige Fehlerzähler vorzuhalten, wobei die mindestens zwei RX-Protokollmaschinen ausgestaltet sind, ihren Bit-Timing-Parameterdatensatz gegen einen der zusätzlichen Parameterdatensätze abhängig von dem Ergebnis der Auswertung der empfangenen Nachricht auszutauschen und hierbei den zusätzlichen Parameterdatensatz anhand des Werts des zugehörigen Fehlerzählers auszuwählen.

Bei einer Ausführungsvariante kann die Kommunikationssteuereinrichtung ausgestaltet sein, für eine erste Phase, bei welcher alle Teilnehmerstationen gleichzeitig auf eine Busleitung des Bussystems senden können, einen ersten Bit-Timing-Parameterdatensatz vorzuhalten, wobei die Kommunikationssteuereinrichtung ausgestaltet ist, für eine zweite Phase, bei welcher ein exklusiver, kollisionsfreier Zugriff einer Teilnehmerstation auf die Busleitung des Bussystems gewährleistet ist, einen zweiten Bit-Timing-Parameterdatensatz vorzuhalten.

Gemäß einem weiteren Ausführungsbeispiel ist die Kommunikationssteuereinrichtung ausgestaltet, fehlerhafte Datenstücke, die in einem ersten Register abgelegt sind, durch gültige Datenstücke zu ersetzen, die in einem zweiten Register abgelegt sind, wobei die Kommunikationssteuereinrichtung ausgestaltet ist, für die dem ersten Register zugeordnete RX-Protokollmaschine den Bit-Timing-Parameterdatensatz zu übernehmen, welchen die RX-Protokollmaschine verwendet, die dem zweiten Register zugeordnet ist und die gültigen Datenstücke empfangen hat.

Bei einer Ausführungsvariante ist die Kommunikationssteuereinrichtung ausgestaltet, vor dem ersten Versenden einer Nachricht so lange zu warten, bis eine gültige Nachricht empfangen wurde.

Gemäß noch einem weiteren Ausführungsbeispiel sind mindestens zwei Kommunikationssteuereinrichtungen vorgesehen, die an Busleitungen für zwei unterschiedliche Bussysteme angeschlossen sind, wobei jede Kommunikationssteuereinrichtung eine RX-Protokollmaschine mit zugeordnetem Register aufweist, in welches die zugeordnete RX-Protokollmaschine das Ergebnis ihrer Auswertung der empfangenen Nachricht schreibt, und wobei die Teilnehmerstation mindestens zwei zusätzliche RX-Protokollmaschinen mit jeweils einem Register aufweist, in welches die zugeordnete RX-Protokollmaschine das Ergebnis ihrer Auswertung der empfangenen Nachricht schreibt, wobei die mindestens zwei zusätzlichen RX-Protokollmaschinen den RX-Protokollmaschinen wahlweise zugeordnet werden können.

Teilnehmerstation nach einem der vorangehenden Ansprüche, wobei die Kommunikationssteuereinrichtung ausgestaltet ist zu prüfen, ob die empfangene Nachricht für die Teilnehmerstation bestimmt ist oder nicht, und für die empfangene Nachricht im Falle eines Fehlers nur eine Fehlernachricht zu senden, wenn die Prüfung ergibt, dass die empfangene Nachricht für die Teilnehmerstation bestimmt ist.

Die zuvor beschriebene Teilnehmerstation kann Teil eines Bussystems sein, das eine Busleitung und mindestens zwei Teilnehmerstationen aufweist, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Erhöhung der Datenrate eines Bussystems nach Anspruch 10 gelöst. Das Verfahren umfasst den Schritt: Auswerten, mit einer Kommunikationssteuereinrichtung, einer Nachricht, die von mindestens einer weiteren Teilnehmerstation des Bussystems über das Bussystem empfangen wurde, bei welchem Bussystem zumindest zeitweise ein exklusiver, kollisionsfreier Zugriff einer Teilnehmerstation auf eine Busleitung des Bussystems gewährleistet ist, wobei die Kommunikationssteuereinrichtung mindestens zwei RX-Protokollmaschinen aufweist, welche verschiedene Bit-Timing-Parameterdatensätze verwenden, um auszuwerten, ob die empfangene Nachricht gültig ist, und wobei den mindestens zwei RX-Protokollmaschinen jeweils ein Register zugeordnet ist, in welches die zugeordnete RX-Protokollmaschine das Ergebnis ihrer Auswertung der empfangenen Nachricht schreibt.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schema zur Erläuterung des Bit-Timings in Bezug auf eine Bitzeit bei dem Bussystem gemäß dem ersten Ausführungsbeispiel;
Fig. 3 ein vereinfachtes Blockschaltbild zur Erläuterung des Aufbaus einer Teilnehmerstation gemäß dem ersten Ausführungsbeispiel;
Fig. 4 ein vereinfachtes Blockschaltbild zur Erläuterung des Aufbaus einer Bussystem-Protokollmaschine gemäß einem zweiten Ausführungsbeispiel;
Fig. 5 ein vereinfachtes Blockschaltbild zur Erläuterung des Aufbaus einer Bussystem-Protokollmaschine gemäß einem zweiten Ausführungsbeispiel; und
Fig. 6 ein vereinfachtes Blockschaltbild zur Erläuterung des Aufbaus eines Systems aus Bussystem-Protokollmaschinen gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

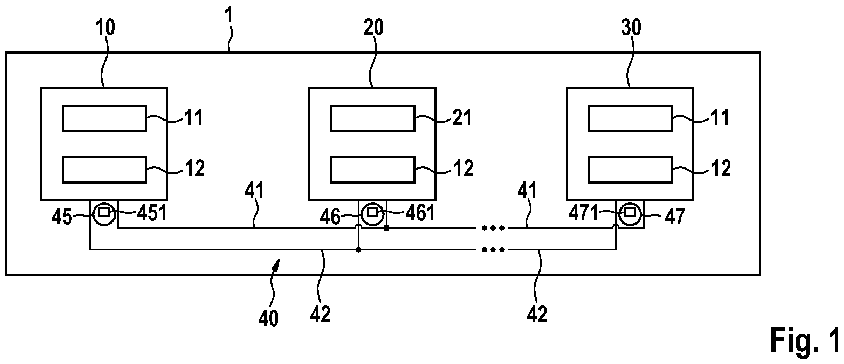

Fig. 1 zeigt ein Bussystem 1, das beispielsweise ein serielles Bussystem, insbesondere ein CAN-Bussystem, ein CAN-FD-Bussystem, usw., sein kann. Das Bussystem 1 ist in einem Fahrzeug, insbesondere einem Kraftfahrzeug, einem Flugzeug, usw., oder in einer Produktionsanlage, im Krankenhaus, usw. verwendbar. Auch wenn die Erfindung nachfolgend anhand des CAN-Bussystems beschrieben ist, ist dies nicht einschränkend. Das Prinzip der Erfindung ist stattdessen bei einem anderen seriellen Bussystem einsetzbar.

In Fig. 1 hat das Bussystem 1 mindestens zwei Teilnehmerstationen 10, 20, 30, die jeweils an eine Busleitung 40 mit zwei Busadern 41, 42 angeschlossen sind. Die Teilnehmerstationen 10, 20, 30 sind beispielsweise Steuergeräte oder Anzeigevorrichtungen oder Sensoren oder Aktoren eines Kraftfahrzeugs. Über die Busleitung 40 sind Nachrichten 45, 46, 47 in der Form von Signalen zwischen den einzelnen Teilnehmerstationen 10, 20, 30 übertragbar. Die Nachrichten 45, 46, 47 haben jeweils einen von Nachrichten-Identifizierern (Nachrichten-Identifier) 451, 461, 471, der bei CAN-Bussystemen auch als CAN-ID bezeichnet wird. Der Nachrichten-Identifizierer 451, 461, 471 kennzeichnet eindeutig die Teilnehmerstation, welche die zugehörige Nachricht 45, 46, 47 gesendet hat.

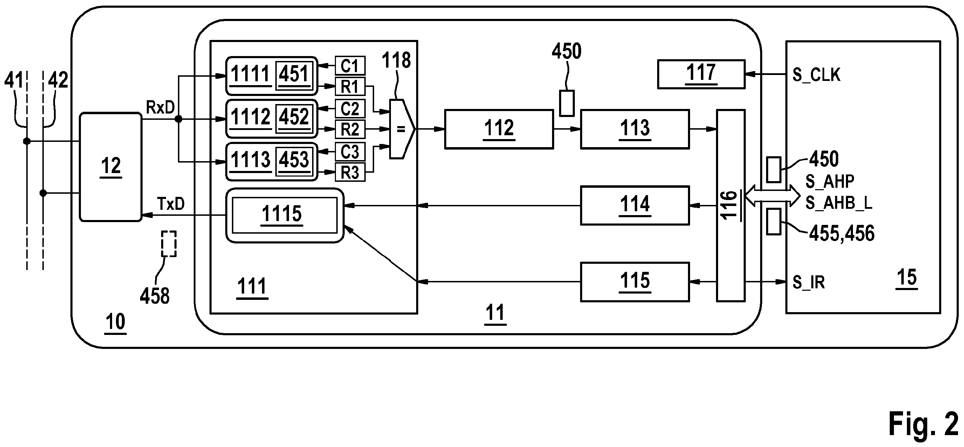

Wie in Fig. 1 gezeigt, hat die Teilnehmerstation 10 eine Kommunikationssteuereinrichtung 11 und eine Sende-/Empfangseinrichtung 12. Die Teilnehmerstation 20 hat dagegen eine Kommunikationssteuereinrichtung 21 und eine Sende-/Empfangseinrichtung 12. Die Teilnehmerstation 30 hat, wie die Teilnehmerstation 10, eine Kommunikationssteuereinrichtung 11 und eine Sende-/Empfangseinrichtung 12. Die Sende-/Empfangseinrichtungen 12 der Teilnehmerstationen 10, 20, 30 sind jeweils direkt an die Busleitung 40 angeschlossen, auch wenn dies nur in Fig. 2 dargestellt ist.

Die Kommunikationssteuereinrichtung 11 von Fig. 1 dient zur Steuerung einer Kommunikation der jeweiligen Teilnehmerstation 10, 20, 30 über die Busleitung 40 mit einer anderen Teilnehmerstation der an die Busleitung 40 angeschlossenen Teilnehmerstationen 10, 20, 30. Die Kommunikationssteuereinrichtung 11 kann in Bezug auf ihre Sendefunktionalität wie ein herkömmlicher CAN-Controller ausgeführt sein. Die Sende-/Empfangseinrichtung 12 kann wie ein herkömmlicher CAN-Transceiver ausgeführt sein. Die Teilnehmerstation 20 entspricht hingegen sowohl in Bezug auf ihre Sende- als auch ihre Empfangsfunktionalität einer herkömmlichen CAN-Teilnehmerstation.

In einem CAN-Bussystem können mehrere der Teilnehmerstationen 10, 20, 30 zeitweise gleichzeitig Nachrichten 45, 46, 47 mit Nachrichten-Identifizierer (Nachrichten-Identifier) 451, 461, 471 aussenden. Diese Nachrichten-Identifizierer 451, 461, 471 werden zur Arbitrierung in der Arbitrierungsphase genutzt. Nach der Arbitrierung schließt sich eine Datenphase an, in welcher nur eine Teilnehmerstation der Teilnehmerstationen 10, 20, 30 Signale in der Form einer oder mehrerer der Nachrichten 45, 46, 47 auf die Busleitung 40 sendet. Diese eine Teilnehmerstation der Teilnehmerstationen 10, 20, 30 hat die Nachricht 45, 46, 47 mit der höchsten Priorität zu senden und daher die Arbitrierung gewonnen. Ab diesem Moment kann jede hörende Teilnehmerstation 10, 20, 30 die Bussignale bzw. Nachrichten 45, 46, 47 beobachten und empfangen. In dieser Phase der Kommunikation, welche auch als Daten-Phase bezeichnet wird, werden die eigentlich zwischen den Teilnehmerstationen 10, 20, 30 zu übertragenden Daten gesendet. n

Gemäß Fig. 2 ist die Teilnehmerstation 10 hierfür derart aufgebaut, dass die Sende-Empfangseinrichtung 12 von den Busadern 41, 42 Signale empfängt. Diese Signale werden bei einem CAN-Bussystem als CAN_H und CAN_L bezeichnet und bilden auf den Busadern 41, 42 eine differenzielle Spannung VDIFF = CAN_H - CAN_L als Bussignal aus, wie bekannt. Die Sende-Empfangseinrichtung 12 bildet aus den analogen Signalen CAN_H und CAN_L ein digitales Empfangssignal RxD und gibt dieses an die Kommunikationssteuereinrichtung 11 aus. Ist die Teilnehmerstation 10 als Sender aktiv, gibt die Kommunikationssteuereinrichtung 11 ein digitales Sendesignal TxD an die Sende-Empfangseinrichtung 12 aus. Das Sendesignal TxD ist je nach empfangenem Empfangssignal RxD eine Fehlernachricht 458, wie nachfolgend genauer beschrieben. Die Sende-Empfangseinrichtung 12 bildet aus dem digitalen Sendesignal TxD die analogen Signale CAN_H und CAN_L und sendet diese auf die Busadern 41, 42, wie bekannt.

Wie in Fig. 2 gezeigt, hat die Kommunikationssteuereinrichtung 11 der Teilnehmerstation 10 hierfür unter anderem eine Bussystem-Protokollmaschine 111, ein Akzeptanzfilter 112, einen Empfangs-Zwischenspeicher 113 zum Speichern von als gültig beurteilten empfangenen Daten 450, einen Primär-Sendespeicher 114 zum Speichern von zu sendenden Daten 455 mit hoher Priorität, einen Sekundär-Sendespeicher 115 zum Speichern von zu sendenden Daten 456 mit geringer Priorität und eine Schnittstelle 116 zu einem Steuergerät 15 der Teilnehmerstation 10, das beispielsweise ein Sensor oder ein Aktor oder eine elektronische Steuereinheit ist und die zu sendenden Daten 455, 456 produziert oder die gültigen empfangenen Daten 450 weiterverarbeitet. Über die Schnittstelle 116 tauschen die Kommunikationssteuereinrichtung 11 und das Steuergerät 15 Signale S_AHP oder S_AHB_L aus und die Kommunikationssteuereinrichtung 11 kann ein Interruptsignal S_IR an das Steuergerät 15 senden. Außerdem hat die Kommunikationssteuereinrichtung 11 einen Vorteiler 117, welcher ein Taktsignal S_CLK von dem Steuergerät 15 unter Verwendung eines ganzzahligen Teilers in ein Signal mit geringerer Frequenz für die Kommunikationssteuereinrichtung 11 herunterteilt.

Im Unterschied zu einer herkömmlichen Kommunikationssteuereinrichtung hat die Kommunikationssteuereinrichtung 11 von Fig. 2 mindestens zwei RX-Protokollmaschinen, nämlich in dem vorliegenden Beispiel eine erste RX-Protokollmaschine 1111, eine zweite RX-Protokollmaschine 1112 und eine dritte RX-Protokollmaschine 1113, welche jeweils das Empfangssignal RxD als Daten 451, 452, 453 empfangen. Außerdem ist eine Vergleichseinheit 118 vorgesehen, welche den RX-Protokollmaschinen 1111 bis 1113 nachgeschaltet ist. Zudem hat die Kommunikationssteuereinrichtung 11, wie üblich, eine TX-Protokollmaschine 1115, welche das Sendesignal TxD erstellt und an die Sende-Empfangseinrichtung 12 ausgibt.

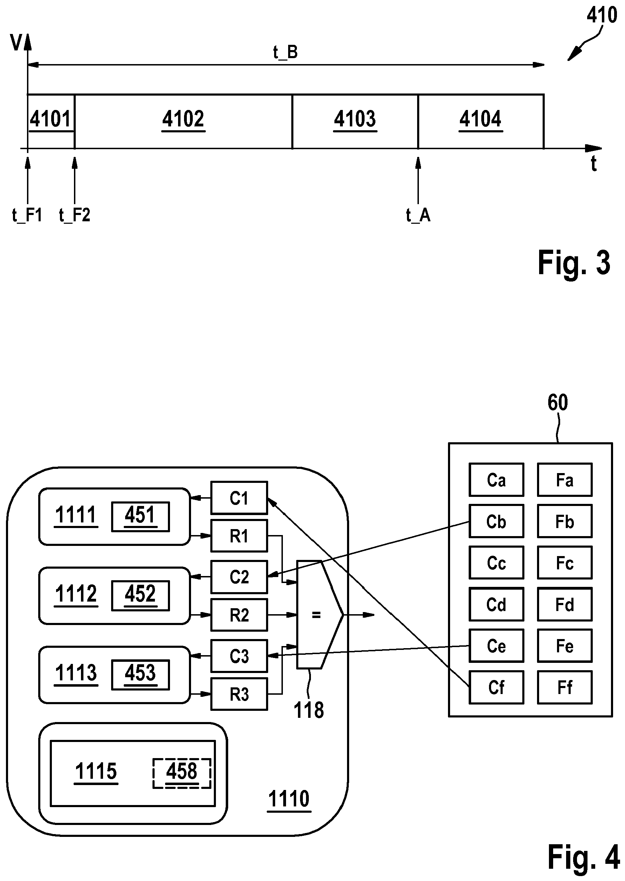

Die erste RX-Protokollmaschine 1111 wertet das Empfangssignal RxD anhand von Bit-Timing Parametern eines ersten Bit-Timing-Parameterdatensatzes C1 einer Bitzeit t_B aus, woraus sich die Daten 451 ergeben. Die Bitzeit t_B ist die zeitliche Länge eines einzelnen Bits des digitalen Empfangssignals RxD und ist im Zusammenhang mit Fig. 3 und zugehörigen Bit-Timing-Parametern nachfolgend genauer beschrieben. Das Ergebnis der Auswertung schreibt die erste RX-Protokollmaschine 1111 in ein erstes Register R1.

Die zweite RX-Protokollmaschine 1112 wertet das Empfangssignal RxD anhand von Bit-Timing Parametern eines zweiten Bit-Timing-Parameterdatensatzes C2 der Bitzeit t_B aus, woraus sich die Daten 452 ergeben. Das Ergebnis der Auswertung schreibt die zweite RX-Protokollmaschine 1112 in ein zweites Register R2.

Die dritte RX-Protokollmaschine 1113 wertet das Empfangssignal RxD anhand von Bit-Timing Parametern eines dritten Bit-Timing-Parameterdatensatzes C3 der Bitzeit t_B aus, woraus sich die Daten 453 ergeben. Das Ergebnis der Auswertung schreibt die dritte RX-Protokollmaschine 1113 in ein drittes Register R3.

Die mindestens zwei RX-Protokollmaschinen 1111 bis 1113 arbeiten während des Empfangs des digitalen Empfangssignals RxD gleichzeitig jedoch mit unterschiedlichen Einstellungen, nämlich den Bit-Timing-Parameterdatensätzen C1 bis C3 bei dem vorliegenden Beispiel, und schreiben die empfangenen Daten 451 zunächst in voneinander getrennte Register R1 bis R3. Die Vergleichseinheit 118 vergleicht die Daten 451 bis 453 miteinander. Dies ist nachfolgend ausführlicher beschrieben.

Fig. 3 veranschaulicht die Bit-Timing-Parameter der Bitzeit t_B für ein einzelnes Bit 410 genauer. Am Anfang des Bits 410 bzw. am Anfang der Bitzeit t_B ist ein Sync-Abschnitt 4101 angeordnet, zu dessen Beginn beim Zeitpunkt t_F1 und zu dessen Ende beim Zeitpunkt t_F2 eine Flankenerkennung stattfindet.

Zudem hat das einzelne Bit 410 anschließend an den Sync-Abschnitt 4101 ein Signalausbreitungssegment 4102, und anschließend zwei aufeinanderfolgende Phasensegmente 4103, 4104. Zwischen dem ersten Phasensegment 4103 und dem zweiten Phasensegment 4104 ist ein Abtastzeitpunkt t_A angeordnet, bei welchem der Spannungszustand oder Spannungspegel des Bits 410 abgetastet wird. Je nach Länge der beiden Phasensegmente 4103, 4104, wobei auch unterschiedliche Längen bzw. Zeitdauern der Phasensegmente 4103, 4104 möglich sind, ist der Abtastzeitpunkt t_A innerhalb der Bitzeit t_B verschiebbar. Die Länge bzw. Zeitdauer des Signalausbreitungssegments 4102 ist jeweils abhängig von der Topologie der Busleitung 40 bzw. der Anzahl der Teilnehmerstationen 10, 20, 30, des räumlichen Abstands zwischen den einzelnen Teilnehmerstationen 10, 20, 30, der Anzahl und Länge der Stichleitungen zum Anbinden der Teilnehmerstationen 10, 20, 30 an die Busleitung 40, usw..

Werden durch EMV-Einstrahlung die Flanken des Bits 410 verfälscht, kann es vorkommen, dass das Bit 410 beim Empfang verloren geht bzw. nicht erfasst werden kann. Außerdem kann ein Fehler auftreten, wenn das Bit 410 zu einem ungünstigen Abtastzeitpunkt t_A abgetastet wird. Generell kann durch EMV-Einstrahlung der Pegel des Bits 410 so stark verfälscht werden, dass auch beim Abtasten zu einem optimalen Abtastzeitpunkt t_A ein fehlerhaftes Bit 410 empfangen wird, während beim Abtasten kurz vor oder kurz nach dem optimalen Abtastzeitpunkt t_A das Bit 410 fehlerfrei empfangen werden kann.

Darum soll hauptsächlich der Abtastzeitpunkt t_A variiert werden. Dazu wird für jeden der verschiedenen Bit-Timing-Parameterdatensätze C1 bis C3 eine beliebig wählbare Kombination der folgenden wählbaren Parameter festgelegt, wobei es möglich ist, dass sich die verschiedenen Bit-Timing-Parameterdatensätze C1 bis C3 nur durch mindestens einen der nachfolgend genannten Parameter unterscheiden. In erster Linie sind das die Bit-Timing-Parameter, die in der ISO11898-1:2015 beschrieben sind:
a. Prescaler m
b. Prop_Seg
c. Phase_Seg1
d. Phase_Seg2
e. SJW

Eine Variation dieser Parameter ermöglicht implizit, dass auch die Bitraten variiert werden können.

Empfängt somit eine der RX-Protokollmaschinen 1111 bis 1113 von Fig. 2 aus dem Empfangssignal RxD, das auf einer Nachricht 45 basiert, unplausible Daten, beispielsweise die Daten 451 der Maschine 1111, wird mit Hilfe der Vergleichseinheit 118 und dem Akzeptanzfilter 112 geprüft, ob eine der anderen RX-Protokollmaschinen 1112, 1113 aus dem Empfangssignal RxD plausible Daten empfangen kann.

Die Vergleichseinheit 118 entscheidet durch Auswertung einer Prüfsumme (CRC-Summe) am Ende der Daten 451 bis 453, ob der Empfang korrekt war. Der Empfang war korrekt, wenn die Auswertung der Prüfsumme (CRC-Summe) am Ende der Daten 451 bis 453 ein gültiges Ergebnis liefert (CRC=OK). Andernfalls war der Empfang nicht korrekt. Die Kommunikationssteuereinrichtung 11 meldet auf den Bus 40 am Ende der Nachricht 45 immer mit einem Acknowledge-Bit zurück, ob der Empfang korrekt war oder nicht.

Solange eine der RX-Protokollmaschinen 1111 bis 1113 aus dem Empfangssignal RxD gültige bzw. plausible Daten empfangen kann, entscheidet die Vergleichseinheit 118, dass der Empfang fortgesetzt wird, auch wenn einzelne RX-Protokollmaschinen 1111 bis 1113 fehlerhafte Daten empfangen. Empfangen alle anderen RX-Protokollmaschinen 1111 bis 1113 aus dem Empfangssignal RxD keine plausiblen Daten, dann wird der Empfang durch eine Fehlernachricht 458 abgebrochen.

Sollten nach dem Empfang mindestens zwei Register der Register R1 bis R3 gültige bzw. plausible aber voneinander unterschiedliche Daten 451, 452, 453 vorhalten, dann wird der Inhalt der Nachricht 45 verworfen und als Sendesignal TxD eine Fehlernachricht 458 verschickt. Hierbei kann folgendermaßen vorgegangen werden. Empfangen mindestens zwei der RX-Protokollmaschinen 1111 bis 1113 unterschiedliche aber gültige Daten 451 bis 453 zu unterschiedlichen Zeiten, kann das Acknowledge-Bit gesendet werden, sobald die erste RX-Protokollmaschine, beispielsweise die RX-Protokollmaschine 1112, nach der Auswertung der Prüfsumme zu einem gültigen Ergebnis kommt. Sollten im weiteren Verlauf weitere RX-Protokollmaschinen ebenfalls gültige aber abweichende Daten 451, 452, 453 der Nachrichten 45 empfangen, dann wird von der Kommunikationssteuereinrichtung 11 anstatt eines weiteren Acknowledge-Bits eine Fehlernachricht 458 gesendet.

Als Alternative zu dem vorangehenden Vorgehen der Kommunikationssteuereinrichtung 11, anstatt eines weiteren Acknowledge-Bits eine Fehlernachricht 458 zu senden, ist es noch vorteilhafter folgendermaßen vorzugehen. Wenn von der Kommunikationssteuereinrichtung 11 einmal ein Acknowledge-Bit gesendet wurde, darf aufgrund des Empfangsergebnisses der anderen RX-Protokollmaschinen nichts mehr vorgenommen werden. Das heißt, die Kommunikationssteuereinrichtung 11 darf weder eine Fehlernachricht 458 aufgrund des Empfangsergebnisses der anderen RX-Protokollmaschinen senden oder noch ein weiteres Acknowledge-Bit senden. In diesem Fall können die anderen RX-Protokollmaschinen ihre Arbeiten im Zusammenhang mit dem Empfang der derzeitigen Nachricht 45 einfach abbrechen und auf die nächste Nachricht warten.

Enthält eines der Register R1 bis R3 gültige Daten 451, 452, 453 oder mindestens zwei der Register R1 bis R3 übereinstimmend gültige Daten 451, 452, 453, dann werden diese als Daten 450 in den Empfangs-Zwischenspeicher 113 geschrieben, sofern eine Prüfung der ID bzw. des Nachrichten-Identifizierers 451 der Nachricht 45 durch das Akzeptanzfilter 112 erfolgreich war. Die Prüfung des Akzeptanzfilters 112 ist erfolgreich, wenn die Daten 450 für das Steuergerät 15 relevant sind.

Die vom Akzeptanzfilter 112 durchgeführte Akzeptanzfilterung entscheidet somit darüber, ob eine Nachricht 45 bzw. deren Daten 451 als Daten 450 im Empfangsspeicher 113 gespeichert werden, oder nicht.

Durch die Teilnehmerstationen 10, 30 können somit für verschiedene Konfigurationen des Bussystems 1 aus dem RxD-Empfangssignal gültige Daten 450 empfangen werden. Dadurch kann die Datenrate des Bussystems 1 im Vergleich zu einem herkömmlichen Bussystem erhöht werden. Somit führen die Teilnehmerstationen 10, 30 ein Verfahren zur Erhöhung der Datenrate des Bussystems 1 aus.

Gemäß einer Modifikation des zuvor beschriebenen Ausführungsbeispiels wird der Fall berücksichtigt, dass die Teilnehmerstation 10, insbesondere ein Sensor, usw., in vielen unterschiedlichen Bussystemen 1 eingesetzt werden soll, die unterschiedlichen Gesamtlängen, Taktfrequenzen und Anzahl der Teilnehmerstationen aufweisen. In diesem Fall ist es vorteilhaft, folgendermaßen vorzugehen. Nach dem ersten Betrieb der Teilnehmerstation 10 in dem Bussystem 1 wartet die Teilnehmerstation 10 vor dem ersten Versenden einer Nachricht 45 solange, bis die Teilnehmerstation 10 eine gültige Nachricht 45 bzw. gültige Daten 450 empfangen kann. Sobald dies gelungen ist, kann die Teilnehmerstation 10 aus dem zugehörigen Datensatz C1 bis C3 ermitteln, mit welchen Baudraten in dem Bussystem 1 gearbeitet wird. Erst ab diesem Zeitpunkt versendet die Teilnehmerstation 10 ihre Daten mit den im Bus vorherrschenden Baudraten. Dadurch ist die Teilnehmerstation 10 ohne Softwareänderung in Bussystemen 1 beliebiger Konfiguration einsetzbar.

Gemäß einer weiteren Modifikation des zuvor beschriebenen Ausführungsbeispiels kann der Kommunikationssteuereinrichtung 11 durch eine zusätzliche Information im Empfangsregister R1 bis R3 mitgeteilt werden, wie viele RX-Protokollmaschinen 1111 bis 1113 die Nachricht 45 fehlerfrei empfangen haben. Die Kommunikationssteuereinrichtung 11, insbesondere ihre Software, kann dann entscheiden, ob die Anzahl der fehlerfreien Auswertungen ausreichend ist und/oder ob die empfangene Information oder die Daten 450 vertrauenswürdig genug ist/sind und/oder ob die Signalqualität ausreichend ist, um diese in sicherheitsrelevante Entscheidungen mit einfließen zu lassen oder um die Signalübertragung durch eine Fehlernachricht 458 abzubrechen und/oder wiederholen zu lassen. Auf Wunsch kann die Signalübertragung mit den unteren Protokollschichten besser abgesichert werden als das bislang möglich ist. Ein solches Vorgehen ist vorteilhaft, wenn besonderer Wert darauf gelegt wird, dass Nachrichten 45, 46, 47 nicht unbemerkt fehlerhaft empfangen werden. Dies ist beispielsweise der Fall, wenn die Daten 450 nicht durch höhere Protokollschichten abgesichert werden sollen.

Fig. 4 zeigt eine Bussystem-Protokollmaschine 1110 gemäß einem zweiten Ausführungsbeispiel. Die Bussystem-Protokollmaschine 1110 gemäß dem vorliegenden Ausführungsbeispiel kann anstelle der Bussystem-Protokollmaschine 111 gemäß dem ersten Ausführungsbeispiel bei mindestens einer der Teilnehmerstationen 10, 30 zum Einsatz kommen. Zusätzlich oder alternativ ist die Bussystem-Protokollmaschine 1110 gemäß dem vorliegenden Ausführungsbeispiel bei der Teilnehmerstationen 20 einsetzbar. Das Bussystem 1 ist bis auf die nachfolgend beschriebenen Unterschiede auf die gleiche Weise ausgeführt wie zuvor in Bezug auf das erste Ausführungsbeispiel und/oder dessen Modifikationen beschrieben.

Bei der Bussystem-Protokollmaschine 1110 gemäß dem vorliegenden Ausführungsbeispiel sind die optimalen Bit-Timing-Parameter für den Parameterdatensatz C1 bis C3 adaptiv lernbar, wie folgt. Hierfür sind mehr Bit-Timing-Konfigurationen Ca, Cb, Cc, Cd, Ce, Cf in einer Tabelle 60 hinterlegt als RX-Protokollmaschinen 1111 bis 1113 verfügbar sind. Die Tabelle 60 kann in einer Datei oder in einer Datenbank vorgesehen sein. Zu jeder Bit-Timing-Konfiguration Ca, Cb, Cc, Cd, Ce, Cf gibt es außerdem einen Fehlerzähler Fa, Fb, Fc, Fd, Fe.

Immer wenn eine der RX-Protokollmaschinen 1111 bis 1113 eine Nachricht 45 fehlerhaft empfangen hat, eine der anderen RX-Protokollmaschinen 1111 bis 1113 die Nachricht 45 jedoch fehlerfrei empfangen konnte, dann wählt die RX-Protokollmaschine 1111 bis 1113 nach dem erfolglosen Empfang als Bit-Timing-Parameterdatensatz C1 bis C3 eine Bit-Timing-Konfiguration Ca, Cb, Cc, Cd, Ce, Cf aus, die von keiner der anderen RX-Protokollmaschinen 1111 bis 1113 bereits gewählt wurde und deren Fehlerzähler Fa, Fb, Fc, Fd, Fe den niedrigsten Wert hat.

Empfängt beispielsweise die RX-Protokollmaschine 1111 mit der Konfiguration Cf eine Nachricht 45 fehlerhaft, wohingegen die RX-Protokollmaschine 1112 mit der Konfiguration Cb die Nachricht 45 fehlerfrei empfängt. Dann wählt die RX-Protokollmaschine 1111 die neue Konfiguration Cd, da der Fehlerzähler Fd den niedrigsten Wert aller zur Auswahl verbleibenden Konfigurationen hat. Außerdem wird der Wert des Fehlerzählers Ff um 10 Punkte erhöht und der Wert des Fehlerzählers Fb um einen Punkt erniedrigt.

Empfangen alle oder keine der RX-Protokollmaschinen 1111 bis 1113 die Nachricht 45 fehlerfrei, dann bleiben die Fehlerzählerwerte der Fehlerzähler Fa, Fb, Fc, Fd, Fe gleich.

Kann keine der RX-Protokollmaschinen 1111 bis 1113 die Nachricht 45 fehlerfrei empfangen, dann probiert die RX-Protokollmaschine 1111 bis 1113, welche die Konfiguration mit dem höchsten Fehlerzählerwert anwendet, nacheinander alle anderen Konfigurationen Ca, Cb, Cc, Cd, Ce, Cf mit gleichen oder noch höheren Fehlerzählerwerten in den Fehlerzählern Fa, Fb, Fc, Fd, Fe durch, während alle anderen RX-Protokollmaschine 1111 bis 1113 die Konfigurationen Ca, Cb, Cc, Cd, Ce, Cf mit den niedrigsten Fehlerzählerwerten beibehalten.

Dadurch kann sich die Bussystem-Protokollmaschine 1110 gemäß dem vorliegenden Ausführungsbeispiel auch an geänderte Busbetriebsbedingungen anpassen. Somit sind Änderungen der Umgebungsbedingungen, wie Temperatur und/oder Luftfeuchtigkeit, etc., kompensierbar. Die Bussystem-Protokollmaschine 1110 reagiert nämlich mit einem geänderten Bit-Timing anhand des Parameterdatensatzes C1 bis C3 selbsttätig oder automatisch derart, dass die Bit-Timing-Konfiguration Ca, Cb, Cc, Cd, Ce, Cf so gewählt wird, dass unter allen Bedingungen die optimale Übertragungsrate möglich ist.

Zudem können die Steuergeräte 15, wie Steuereinheiten oder Aktoren oder Sensoren, usw., in unterschiedlichen Bussen eingesetzt werden, ohne die Software für das Bit-Timing bzw. die richtige Baudrate anpassen zu müssen, da sich das optimale Bit-Timing und die richtige Baudrate während des laufenden Betriebs durch Auswahl des optimalen Parameterdatensatzes C1 bis C3, Ca, Cb, Cc, Cd, Ce, Cf automatisch einstellt. Dadurch werden Bussystem-Protokollmaschinen 1110 wesentlich kostengünstiger und dadurch auch für kleinste Stückzahlen rentabel.

Gemäß einer Modifikation des zuvor beschriebenen Ausführungsbeispiels können zusätzlich zu der zuvor beschriebenen Ausführung unterschiedliche Bit-Timing-Parametersätze C1 bis C3, Ca, Cb, Cc, Cd, Ce, Cf mit eigenen Fehlerzählern F1, F2, F3, Fa, Fb, Fc, Fd, Fe für die Arbitrierungs- und Datenphase einer Nachricht 45 vorgehalten werden. Die unterschiedlichen Bit-Timing-Parametersätze C1 bis C3, Ca, Cb, Cc, Cd, Ce, Cf mit eigenen Fehlerzählern F1, F2, F3, Fa, Fb, Fc, Fd, Fe können den jeweils vorhandenen RX-Protokollmaschinen 1111 bis 1113 voneinander unabhängig gemäß dem zuvor beschriebenen Verfahren zugeordnet werden.

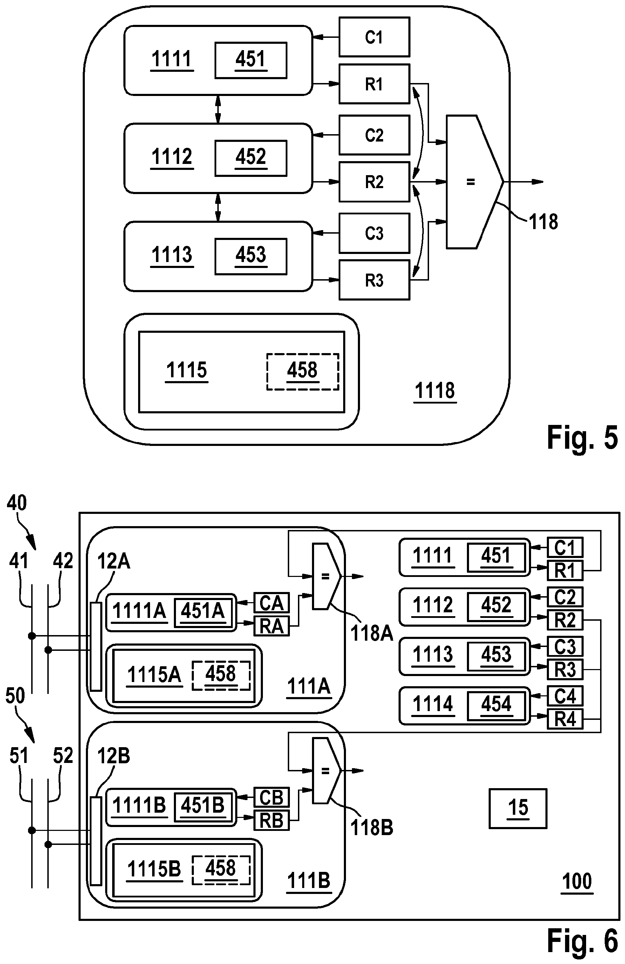

Fig. 5 zeigt eine Bussystem-Protokollmaschine 1118 gemäß einem dritten Ausführungsbeispiel. Die Bussystem-Protokollmaschine 1118 gemäß dem vorliegenden Ausführungsbeispiel kann anstelle einer der Bussystem-Protokollmaschinen 111, 1110 gemäß einem der vorangehenden Ausführungsbeispiele bei mindestens einer der Teilnehmerstationen 10, 30 zum Einsatz kommen. Zusätzlich oder alternativ ist die Bussystem-Protokollmaschine 1118 gemäß dem vorliegenden Ausführungsbeispiel bei der Teilnehmerstation 20 einsetzbar. Das Bussystem 1 ist bis auf die nachfolgend beschriebenen Unterschiede auf die gleiche Weise ausgeführt wie zuvor in Bezug auf das erste Ausführungsbeispiel und/oder dessen Modifikationen beschrieben.

Bei der Bussystem-Protokollmaschine 1118 gemäß dem vorliegenden Ausführungsbeispiel werden, wenn während des Empfangs in einem der Register R1 bis R3 unplausible bzw. fehlerhafte Daten 451 oder nur Datenstücke davon abgelegt werden, in mindestens einem der anderen Register R1 bis R3 aber plausible bzw. nicht als fehlerhaft erkannte Daten 452 oder nur Datenstücke abliegen, die fehlerhaften Daten 452 oder nur Datenstücke durch die plausiblen Daten 452 oder nur Datenstücke ersetzt. Außerdem wird der aktuelle Bit-Timing-Parametersatz C1 bis C3 von der Auswertung übernommen, mit welchem die gültigen Daten 452 oder nur Datenstücke empfangen werden konnten. Unter dem Austausch des aktuellen Bit-Timing-Parametersatzes C1 bis C3 ist zu verstehen, dass ausgetauscht wird, in welchem Zeitschritt die letzte Flanke eines Bits 410 erkannt wurde, um den Abtastpunkt t_A richtig bestimmen zu können. Das Vorgehen bietet einen Vorteil, wenn während der Übertragung einer Nachricht 45 zunächst nur der Empfang mit beispielsweise dem Bit-Timing-Parametersatz C2 danach nur der Empfang mit dem anderen Bit-Timing-Parametersatz C3 zum Erfolg führt. Wenn Daten 451 bzw. Datenstücke von einer der RX-Protokollmaschinen 1111 bis 1113 korrigiert werden mussten, während Daten 452 bzw. Datenstücke von anderen RX-Protokollmaschinen 1111 bis 1113 nicht korrigiert werden mussten, dann werden nur die Fehlerzähler F1, F2, F3, Fa, Fb, Fc, Fd, Fe der RX-Protokollmaschinen 1111 bis 1113 erhöht, bei denen die Korrekturen notwendig waren. Dagegen werden die Fehlerzähler F1, F2, F3, Fa, Fb, Fc, Fd, Fe der anderen RX-Protokollmaschinen 1111 bis 1113 verringert, wie zuvor in Bezug auf Fig. 4 beschrieben.

Auf diese Weise können Störungen im Bussystem 1 noch besser kompensiert bzw. korrigiert werden. Dadurch ist eine noch größere Erhöhung der Datenübertragungsgeschwindigkeit im Bussystem 1 möglich.

Fig. 6 zeigt ein System aus zwei Bussystem-Protokollmaschinen 111A, 111B gemäß einem vierten Ausführungsbeispiel.

Das System steht für den Fall, dass eine Teilnehmerstation 100 über mehrere Bussystem-Protokollmaschinen 111A, 111B verfügt, damit deren Steuergerät 15 an Busleitungen 40, 50 mehrerer Busse angeschlossen werden können. Auch die Busleitung 50 hat eine erste und zweite Busader 51, 52. Für die unterschiedlichen Busse bzw. Busleitungen 40, 50 sind zum Teil bessere Empfangseigenschaften notwendig. Zum Teil sind jedoch weniger gute Empfangseigenschaften ausreichend. Je höhere Anforderungen an die Empfangsqualität gestellt werden, umso mehr RX-Protokollmaschinen 1111 bis 1114 mit Parameterdatensätzen Bit-Timing-Parameterdatensätzen C1 bis C4 und Registern R1 bis R4 zum Empfang von Daten 451 bis 454 sollten mit diesem Bus bzw. Busleitung 40 verbunden sein. Darum ist es auch günstig, wenn zwar immer je eine RX-Protokollmaschine 1111A zum Empfang von Daten 451A und eine TX-Protokollmaschine 1115A fest einem jeweiligen Bus zugeordnet sind, die zusätzlichen RX-Protokollmaschinen 1111 bis 1114, zusammen mit den zugehörigen Konfigurationseinstellungen bzw. Datensätzen C1 bis C4 und Empfangsregistern R1 bis R4, zum Empfang von Daten 451B jedoch variabel den einzelnen Bussen bzw. Busleitungen 40, 50 zugeordnet werden können.

Bei dem Beispiel von Fig. 6 sind für den Bus bzw. die Busleitung 50 zum Teil bessere Empfangseigenschaften notwendig, da diesem die RX-Protokollmaschinen 1112, 1113, 1114 zusätzlich zugeordnet sind wohingegen dem Bus bzw. der Busleitung 40 nur die RX-Protokollmaschine 1111 zusätzlich zugeordnet ist. Es ist jedoch eine andere Zuordnung der RX-Protokollmaschinen 1111 bis 1114 möglich.

Wie groß die Anzahl der zusätzlichen RX-Protokollmaschinen 1111 bis 1114 gewählt wird, kann bei der Auslegung des Systems vorgegeben werden. Es ist aber alternativ denkbar, dass die Zuordnung zumindest einer bestimmten Anzahl an RX-Protokollmaschinen 1111 bis 1114 variabel während des Betriebs geschieht. Es ist vorteilhaft, umso mehr RX-Protokollmaschinen 1111 bis 1114 einem Bus zuzuordnen, je mehr fehlerhafte Nachrichten 45, 46, 47 in dem Bussystem 1 empfangen werden.

Somit kann mit allen zuvor beschriebenen Ausführungsbeispielen und/oder deren Modifikationen die Datenübertragungsrate in dem Bussystem 1 erhöht werden. Solange nur eine der Teilnehmerstationen 10, 20, 30 mit dem beschriebenen Verfahren gemäß zumindest einem der zuvor beschriebenen Ausführungsbeispiele und/oder deren Modifikationen arbeitet, ist nur eine geringfügige Erhöhung der Datenrate möglich. Sobald aber alle Teilnehmerstationen 10, 20, 30 das beschriebene Verfahren gemäß zumindest einem der zuvor beschriebenen Ausführungsbeispiele und/oder deren Modifikationen einsetzen, kann das volle Potential ausgeschöpft werden

Außerdem kann das volle Potential zur Erhöhung der Datenübertragungsrate in dem Bussystem 1 ausgeschöpft werden, wenn zwar nur eine der Teilnehmerstationen 10, 20, 30 mit dem beschriebenen Verfahren gemäß zumindest einem der zuvor beschriebenen Ausführungsbeispiele und/oder deren Modifikationen arbeitet, die übrigen Teilnehmerstationen 10, 20, 30 jedoch über die Busleitung 40 keine Fehlernachrichten 458 bei Nachrichten 45, 46, 47 versenden, die nicht für diese Teilnehmerstationen 10, 20, 30 bestimmt sind. Hierfür können die übrigen Teilnehmerstationen 10, 20, 30 beispielsweise eine Liste speichern, in welcher die Nachrichten-Identifizierer 451, 461, 471 von Teilnehmerstationen 10, 20, 30 abgelegt sind, von denen die übrigen Teilnehmerstationen 10, 20, 30 keine Daten verarbeiten. Alternativ können die übrigen Teilnehmerstationen 10, 20, 30 die Fehlerbehandlung auch ganz ausschalten.

Dadurch wird verhindert, dass Signale, die von bestimmten Empfängern korrekt empfangen werden können, durch Teilnehmerstationen zerstört werden, die an der Datenübertragung unbeteiligt sind. Dadurch wird ein breiterer Einsatz von CAN-FD und eine höhere maximale Datenrate auf einem CAN-Bus als bisher erreicht.

Alle zuvor beschriebenen Ausgestaltungen des Bussystems 1 der Teilnehmerstationen 10, 20, 30 und des Verfahrens gemäß den Ausführungsbeispielen und deren Modifikationen können einzeln oder in allen möglichen Kombinationen Verwendung finden. Zusätzlich sind insbesondere folgende Modifikationen denkbar.

Das zuvor beschriebene Bussystem 1 gemäß den Ausführungsbeispielen und deren Modifikationen ist anhand eines auf dem CAN-Protokoll basierenden Bussystems beschrieben. Das Bussystem 1 gemäß den Ausführungsbeispielen und deren Modifikationen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf die Busleitung 40 oder einen gemeinsamen Kanal der Busleitung 40 gewährleistet ist.

Das Bussystem 1 gemäß dem ersten bis dritten Ausführungsbeispiel ist insbesondere ein CAN-Netzwerk oder ein CAN FD-Netzwerk oder ein LIN-Netzwerk oder ein FlexRay-Netzwerk.

Die Anzahl und Anordnung der Teilnehmerstationen 10, 20, 30, 100 in den Bussystemen 1 gemäß den Ausführungsbeispielen und deren Modifikationen ist beliebig. Insbesondere können auch nur Teilnehmerstationen 10 oder Teilnehmerstationen 30 oder Teilnehmerstationen 100 in den Bussystemen 1 der Ausführungsbeispiele und deren Modifikationen vorhanden sein.

Um eine noch höhere Datenrate zu erzielen, kann innerhalb des CAN-Rahmens der Nachrichten 45, 46, 47 die Datenübertragung, beispielsweise in der Datenphase, analog zu anderen seriellen Datenübertragungsprotokollen erfolgen, wie beispielsweise Ethernet, usw.

Die Funktionalität der zuvor beschriebenen Ausführungsbeispiele lässt sich in einem Chipsatz einer Kommunikationssteuereinrichtung 11 umsetzen. Zusätzlich oder alternativ kann es in existierende Produkte integriert werden. Insbesondere ist es möglich, dass die betrachtete Funktionalität entweder in der Kommunikationssteuereinrichtung 11 als separater elektronischer Baustein (Chip) oder in einer integrierten Gesamtlösung, bei welchem nur ein elektronischer Baustein (Chip) vorhanden ist, eingebettet ist.

## Patentansprüche

1. Teilnehmerstation (10; 30; 100) für ein Bussystem (1), mit
einer Kommunikationssteuereinrichtung (11) zur Auswertung einer Nachricht (45, 46, 47), die von mindestens einer weiteren Teilnehmerstation (10, 20, 30;100) des Bussystems (1) über das Bussystem (1) empfangen wurde, bei welchem Bussystem (1) zumindest zeitweise ein exklusiver, kollisionsfreier Zugriff einer Teilnehmerstation (10, 20, 30; 100) auf eine Busleitung (40; 50) des Bussystems (1) gewährleistet ist,
wobei die Kommunikationssteuereinrichtung (11) mindestens zwei RX-Protokollmaschinen (1111 bis 1113; 1111 bis 1114) aufweist, welche eingerichtet sind, verschiedene Bit-Timing-Parameterdatensätze (C1 bis C3; Ca bis Ce; C1 bis C4) zu verwenden, um auszuwerten, ob die empfangene Nachricht (45, 46, 47) gültig ist,
wobei den mindestens zwei RX-Protokollmaschinen (1111 bis 1113; 1111 bis 1114) jeweils ein Register (R1 bis R3; R1 bis R4) zugeordnet ist, in welches die zugeordnete RX-Protokollmaschine (1111 bis 1113; 1111 bis 1114) ausgestaltet ist, das Ergebnis ihrer Auswertung der empfangenen Nachricht (45, 46, 47) zu schreiben.

2. Teilnehmerstation (10; 30; 100) nach Anspruch 1,
zudem mit einer Vergleichseinheit (118) zum Vergleich von Daten (451 bis 453; 451 bis 454; 451 bis 453; 451A, 451; 451B, 452 bis 454) der Register (R1 bis R3; R1 bis R4; RA, R1; RB, R2 bis R4), und
zudem einem Empfangsspeicher (113) zum Speichern von gültigen Daten (450) eines der Register (R1 bis R3; R1 bis R4; RA, R1; RB, R2 bis R4) sofern eine Prüfung anhand eines Nachrichten-Identifizierers (451; 461; 471) erfolgreich war, der in der empfangenen Nachricht (45; 46; 47) umfasst ist, und zur Weitergabe der gültigen Daten (450) an eine Schnittstelle (116) zu einem Steuergerät (15) der Teilnehmerstation (10; 30; 100).

3. Teilnehmerstation (10; 30) nach Anspruch 1 oder 2,
wobei die Kommunikationssteuereinrichtung (11) ausgestaltet ist, zusätzlich zu den Bit-Timing-Parameterdatensätzen (C1 bis C3; C1 bis C4), die den mindestens zwei RX-Protokollmaschinen (1111 bis 1113; 1111 bis 1114) zugeordnet sind, zusätzliche Parameterdatensätze (Ca bis Cf) und zugehörige Fehlerzähler (Fa bis Ff) vorzuhalten, und
wobei die mindestens zwei RX-Protokollmaschinen (1111 bis 1113; 1111 bis 1114) ausgestaltet sind, ihren Bit-Timing-Parameterdatensatz (C1 bis C3; C1 bis C4) gegen einen der zusätzlichen Parameterdatensätze (Ca bis Cf) abhängig von dem Ergebnis der Auswertung der empfangenen Nachricht (45, 46, 47) auszutauschen und hierbei den zusätzlichen Parameterdatensatz (Ca bis Cf) anhand des Werts des zugehörigen Fehlerzählers (Fa bis Ff) auszuwählen.

4. Teilnehmerstation (10; 30; 100) nach einem der vorangehenden Ansprüche,
wobei die Kommunikationssteuereinrichtung (11) ausgestaltet ist, für eine erste Phase, bei welcher alle Teilnehmerstationen (10, 20, 30) gleichzeitig auf die Busleitung (40; 50) des Bussystems (1) senden können, einen ersten Bit-Timing-Parameterdatensatz (C1 bis C3; Ca bis Ce; C1 bis C4) vorzuhalten, und
wobei die Kommunikationssteuereinrichtung (11) ausgestaltet ist, für eine zweite Phase, bei welcher ein exklusiver, kollisionsfreier Zugriff einer Teilnehmerstation (10, 20, 30) auf die Busleitung (40; 50) des Bussystems (1) gewährleistet ist, einen zweiten Bit-Timing-Parameterdatensatz (C1 bis C3; Ca bis Ce; C1 bis C4) vorzuhalten.

5. Teilnehmerstation (10; 30; 100) nach einem der vorangehenden Ansprüche,
wobei die Kommunikationssteuereinrichtung (11) ausgestaltet ist, fehlerhafte Datenstücke, die in einem ersten Register (R1) abgelegt sind, durch gültige Datenstücke zu ersetzen, die in einem zweiten Register (R2) abgelegt sind, und
wobei die Kommunikationssteuereinrichtung (11) ausgestaltet ist, die dem ersten Register (R1) zugeordnete RX-Protokollmaschine (1111) den Bit-Timing-Parameterdatensatz (C2) zu übernehmen, welchen die RX-Protokollmaschinen (1112) verwendet, die dem zweiten Register (R2) zugeordnet ist und die gültigen Datenstücke empfangen hat.

6. Teilnehmerstation (10; 30; 100) nach einem der vorangehenden Ansprüche, wobei die Kommunikationssteuereinrichtung (11) ausgestaltet ist, vor dem ersten Versenden einer Nachricht (45; 46; 47) so lange zu warten, bis eine gültige Nachricht (45; 46; 47) empfangen wurde.

7. Teilnehmerstation (100) nach einem der vorangehenden Ansprüche,
wobei mindestens zwei Kommunikationssteuereinrichtungen (11) vorgesehen sind, die an Busleitungen (40; 50) für zwei unterschiedliche Bussysteme (1) angeschlossen sind,
wobei jede Kommunikationssteuereinrichtung (11) eine RX-Protokollmaschine (111A; 111B) mit zugeordnetem Register (RA; RB) aufweist, in welches die zugeordnete RX-Protokollmaschine (111A; 111B) das Ergebnis ihrer Auswertung der empfangenen Nachricht (45, 46, 47) schreibt,
wobei die Teilnehmerstation (100) mindestens zwei zusätzliche RX-Protokollmaschinen (1111 bis 1114) mit jeweils einem Register (R1 bis R4) aufweist, in welches die zugeordnete RX-Protokollmaschine (1111 bis 1114) das Ergebnis ihrer Auswertung der empfangenen Nachricht (45, 46, 47) schreibt,
wobei die mindestens zwei zusätzlichen RX-Protokollmaschinen (1111 bis 1114) den RX-Protokollmaschinen (111A; 111B) wahlweise zugeordnet werden können.

8. Teilnehmerstation (10; 30; 100) nach einem der vorangehenden Ansprüche, wobei die Kommunikationssteuereinrichtung (11) ausgestaltet ist zu prüfen, ob die empfangene Nachricht (45; 46; 47) für die Teilnehmerstation (10; 30; 100) bestimmt ist oder nicht, und für die empfangene Nachricht (45; 46; 47) im Falle eines Fehlers nur eine Fehlernachricht (458) zu senden, wenn die Prüfung ergibt, dass die empfangene Nachricht (45; 46; 47) für die Teilnehmerstation (10; 30; 100) bestimmt ist.

9. Bussystem (1), mit
einer Busleitung (40; 50), und
mindestens zwei Teilnehmerstationen (10; 20; 30; 100), welche über die Busleitung (40; 50) derart miteinander verbunden sind, dass sie miteinander kommunizieren können,
wobei mindestens eine der mindestens zwei Teilnehmerstationen (10; 20; 30; 100) eine Teilnehmerstation (10; 30; 100) nach einem der vorangehenden Ansprüche ist.

10. Verfahren zur Erhöhung der Datenrate eines Bussystems (1), mit dem Schritt
Auswerten, mit einer Kommunikationssteuereinrichtung (11), einer Nachricht (45, 46, 47), die von mindestens einer weiteren Teilnehmerstation (10, 20, 30; 100) des Bussystems (1) über das Bussystem (1) empfangen wurde, bei welchem Bussystem (1) zumindest zeitweise ein exklusiver, kollisionsfreier Zugriff einer Teilnehmerstation (10, 20, 30; 100) auf eine Busleitung (40; 50) des Bussystems (1) gewährleistet ist,
wobei die Kommunikationssteuereinrichtung (11) mindestens zwei RX-Protokollmaschinen (1111 bis 1113; 1111 bis 1114) aufweist, welche verschiedene Bit-Timing-Parameterdatensätze (C1 bis C3; Ca bis Ce; C1 bis C4) verwenden, um auszuwerten, ob die empfangene Nachricht (45, 46, 47) gültig ist, und
wobei den mindestens zwei RX-Protokollmaschinen (1111 bis 1113; 1111 bis 1114) jeweils ein Register (R1 bis R3; R1 bis R4) zugeordnet ist, in welches die zugeordnete RX-Protokollmaschine (1111 bis 1113; 1111 bis 1114) das Ergebnis ihrer Auswertung der empfangenen Nachricht (45, 46, 47) schreibt.
